# NEUE EUROPÄISCHE PATENTSCHRIFT

(11) **EP 0 632 897 B2**
(45) Veröffentlichungstag und Bekanntmachung des Hinweises auf die Entscheidung über den Einspruch: **12.12.2001**
(45) Hinweis auf die Patenterteilung: 29.04.1998
(21) Anmeldenummer: 94901773.5
(22) Anmeldetag: 18.12.1993
(51) Int. Cl.: G01P 1/02

(54) **INDUKTIVER SENSOR**
INDUCTIVE SENSOR
CAPTEUR INDUCTIF

(30) Priorität: 22.01.1993 DE 4301595
(43) Veröffentlichungstag der Anmeldung: 11.01.1995
(73) Patentinhaber: ROBERT BOSCH GMBH, 70442 Stuttgart (DE)
(72) Erfinder: STAHL, Ulrich, D-71701 Schwieberdingen (DE); KATZENWADEL, Uwe, D-71739 Oberriexingen (DE)
(86) Internationale Anmeldenummer: DE9301217
(87) Internationale Veröffentlichungsnummer: WO9417417

(56) Entgegenhaltungen:
- DE-A- 3 834 649
- DE-A- 4 106 104
- DE-U- 8 130 414
- DE-U- 8 815 367
- US-A- 5 121 056

## Beschreibung

### Stand der Technik

Die Erfindung geht aus von einem induktiven Sensor mit einer elektrischen Spule nach der Gattung des Hauptanspruchs. Bei in der Praxis üblichen Sensoren wird die Spritzgußmasse der Ummantelung auf den Bereich der Stromschiene, auf dem die Enden der Wicklungen der Spule aufgewickelt sind, direkt aufgespritzt. Aufgrund der unterschiedlichen Ausdehnungskoeffizienten zwischen der Spritzgußmasse und dem Kupferdraht findet zwischen diesen beiden Materialien eine Relativbewegung statt. Da bei Temperaturwechseln der Spulendraht ständig einer Wechselbelastung ausgesetzt ist, kann im Extremfall ein Dauerbruch eintreten. Dies führt zum vollständigen Ausfall des induktiven Sensors.

### Vorteile der Erfindung

Der erfindungsgemäße induktive Sensor hat demgegenüber den Vorteil, daß das Ende der Stromschiene in Silikon eingebettet und von einem Polyimidband vor der Spritzgußmasse der Ummantelung geschützt wird. Dadurch wird ein Freiraum für die Wechselbelastung des Spulendrahtes innerhalb des Spritzgußgehäuses geschaffen. Der Spulendraht kann sich ungehindert ausdehnen. Die Temperaturwechselzyklen können auch über das Vierfache gesteigert werden. Dadurch erhält man einen sehr belastbaren und langlebigen induktiven Sensor.

Durch die in den Unteransprüchen aufgeführten Maßnahmen sind vorteilhafte Weiterbildungen und Verbesserungen des im Hauptanspruch angegebenen Sensors möglich.

### Zeichnung

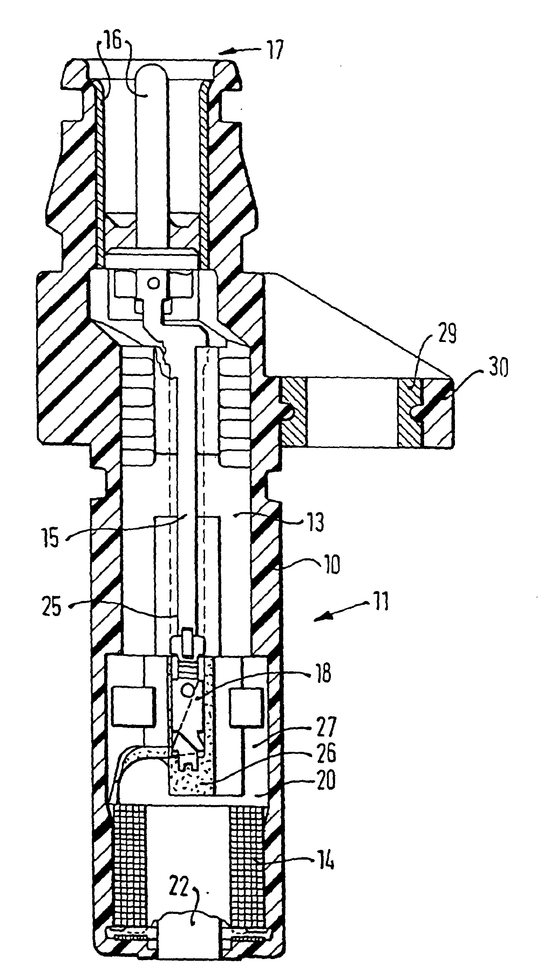

Ein Ausführungsbeispiel der Erfindung ist in der Zeichnung dargestellt und in der nachfolgenden Beschreibung näher erläutert. Die einzige Figur zeigt einen erfindungsgemäßen Sensor im Querschnitt.

### Beschreibung des Ausführungsbeispiels

In der Figur ist mit 10 ein im Spritzgußverfahren hergestelltes Gehäuse eines Drehzahlsensors 11 bezeichnet. In dem Gehäuse 10 ist ein langgestreckter Spulenkörper 13 mit einer eine Wicklung aufweisenden Spule 14 eingesetzt. Die Wicklung der Spule 14 ist an zwei (in der Zeichnung hintereinanderliegenden) Stromschienen 15 angeschlossen. Die nach oben ragenden freien Enden der Stromschienen 15 sind zur Signalabnahme mit den beiden Kontakten 16 eines Anschlußsteckers 17 kontaktiert, zum Beispiel angeschweißt. Derspulenseitige Endabschnitt 18 der Stromschienen 15 ist umgebogen und ragt von der Spule 14 weg. Die dadurch entstandene Biegung der Stromschienen 15 ist aber möglichst nahe beim Spulenschild 20 des Spulenkörpers 13. Als Spulenschild sind die beiden am Spulenkörper 13 ausgebildeten Begrenzungen für die Spule 14 zu verstehen. An den Endabschnitten 18 der Stromschienen 15 ist das jeweilige Ende, d.h. der Anfang bzw.
das Ende der Wicklung der Spule 14 befestigt. In den Spulenkörper 13 ist nach unten, d.h. zu einem nicht dargestellten Zahnrad oder einem sonstigen Rotationskörper, dessen Drehbewegung bestimmt werden soll, ein als sog. Polstift dienender Magnetkern 22 eingesteckt, der durch die Spule 14 hindurchragt. Der Rotationskörper besteht dabei aus insbesondere magnetisch leitendem Material.

Die Stromschienen 15 sind in einer im Spulenkörper 13 ausgebildeten Längsnut 25 angeordnet. Erfindungsgemäß ist der Bereich 18, d.h. der Bereich der Kontaktierung der Wicklungen der Spule 14 mit der Stromschiene 15 mit Silikon 26 vollständig umgeben. Statt Silikon 26 kann auch jeder andere dauerelastische Werkstoff verwendet werden. So würden sich auch andere gelartige Stoffe eignen. Wichtig ist dabei, daß diesem Bereich 18 innerhalb der Umspritzung des Gehäuses ein Freiraum geschaffen wird, in dem sich die Enden des Spulendrahtes, hervorgerufen durch Temperaturschwankungen, ungehindert ausdehnen können. Ferner dürfen in diesen Bereich keine Luft oder sonstige Gase eingeschlossen werden. Es ist zu gewährleisten, daß der Spulendraht bei Schwingbelastungen nicht schwingen kann. Ferner ist das Silikon 26 mit einem Klebeband 27 zum Gehäuse 10 hin abgedeckt. Zur Abdekkung eignen sich temperaturbeständige Klebebänder oder auch dünne Hülsen. Insbesondere, wenn, wie in der Figur dargestellt, diese Abdeckung gleichzeitig die Spule 14 mit überdeckt, so muß die Abdeckung aus elektrisch isolierendem Material bestehen.

Zur Befestigung des Sensors 11 an einem Gehäuse, zum Beispiel an einem Fahrzeuggehäuse, ist in das Gehäuse 10 eine Befestigungslasche 29 in einem flanschartigen Fortsatz 30 eingebettet.

Die Wirkungsweise des Drehzahlsensors ist hinreichend bekannt und braucht deshalb hier nicht ausführlich erläutert zu werden. Von der stromdurchflossenen Spule 14 wird ein Magnetfeld erzeugt. Wird nun das Zahnrad an der Spitze des Magnetkerns 22 vorbeibewegt, so ändert sich während der Bewegung des Zahnrads aufgrund der Zähne und der Zahnlücken der Abstand, d.h. der Luftspalt zwischen dem Polstift und dem Zahnrad wird geändert. Dadurch wird auch das Magnetfeld beeinflußt und somit ein Meßsignal erzeugt.

## Patentansprüche

1. Induktiver Sensor (11), insbesondere Drehzahlgeber, mit einem aus Spritzgußmasse bestehenden Gehäuse (10), in dem sich ein Spulenkörper (13) mit mindestens einer Spule (14) und Stromschienen (15) befinden, an denen die Enden der Wicklungen der Spule (14) befestigt sind und wobei der Bereich der Kontaktierung der Wicklungen der Spule (14) mit der jeweiligen Stromschiene (15) von einem dauerelastischen Stoff (26) und mindestens zum durch Umspritzung erzeugten Gehäuse (10) hin von einem Körper (27) aus temperaturbeständigem Material umgeben sind.

2. Induktiver Sensor nach Anspruch 1, **dadurch gekennzeichnet, daß** der Stoff (26) gelartig ist,

3. Induktiver Sensor nach Anspruch 1, **dadurch gekennzeichnet, daß** der Stoff (26) Silikon ist.

4. Induktiver Sensor nach einem der Ansprüche 1 bis 3, **dadurch gekennzeichnet, daß** der Körper (27) ein Klebeband ist.

5. Induktiver Sensor nach einem der Ansprüche 1 bis 3, **dadurch gekennzeichnet, daß** der Körper (27) ein Polyimidband ist.

6. Induktiver Sensor nach einem der Ansprüche 1 bis 3, **dadurch gekennzeichnet, daß** der Körper (27) eine dünne Hülse ist.

7. Induktiver Sensor nach einem der Ansprüche 1 bis 6, **dadurch gekennzeichnet, daß** im Bereich der Kontaktierung der Wicklungen der Spule (14) mit der jeweiligen Stromschiene (15) keine Luft oder Gase eingeschlossen sind.

## Claims

1. Inductive sensor (11), in particular a rotation speed sensor, having a housing (10) which is composed of an injection-moulded compound and in which a coil former (13) having at least one coil (14) and busbars (15) is located, to which busbars (15) the ends of the windings of the coil (14) are attached, and with the region in which contact is made between the windings of the coil (14) and the respective busbar (15) being surrounded by a permanently elastic material (26) and, at least towards the housing (10) that is produced by extrusion coating, by a body (27) composed of temperature-resistant material.

2. Inductive sensor according to Claim 1, **characterized in that** the material (26) is gel-like.

3. Inductive sensor according to Claim 1, **characterized in that** the material (26) is silicone.

4. Inductive sensor according to one of Claims 1 to 3, **characterized in that** the body (27) is an adhesive tape.

5. Inductive sensor according to one of Claims 1 to 3, **characterized in that** the body (27) is a polyimide tape.

6. Inductive sensor according to one of Claims 1 to 3, **characterized in that** the body (27) is a thin sleeve.

7. Inductive sensor according to one of Claims 1 to 6, **characterized in that** no air or gases are enclosed in the region in which contact is made between the windings of the coil (14) and the respective busbar (15)

## Revendications

1. Capteur inductif (11) notamment capteur de vitesse de rotation comprenant un boîtier (10) constitué d'une masse injectée logeant un corps de bobine (13) avec au moins une bobine (14) et des rails électriques (15) sur lesquels sont fixées les extrémités de l'enroulement de la bobine (14), et la zone de contact avec chaque rail électrique (15) des extrémités des enroulements de la bobine (14), est entourée par une matière à élasticité permanente (26) et, au moins en direction du boîtier (10) réalisé en masse injectée, par un corps (27) en matière résistant à la température.

2. Capteur inductif selon la revendication 1,
**caractérisé en ce que**
la matière (26) est un gel.

3. Capteur inductif selon la revendication 1,
**caractérisé en ce que**
la matière (26) est du silicone.

4. Capteur inductif selon l'une des revendications 1 à 3,
**caractérisé en ce que**
le corps (27) est une bande adhésive.

5. Capteur inductif selon l'une des revendications 1 à 4,
**caractérisé en ce que**
le corps (27) est une bande de polyimide.

6. Capteur inductif selon l'une des revendications 1 à 3,
**caractérisé en ce que**
le corps (27) est un manchon mince

7. Capteur inductif selon l'une des revendications 1 à 6,
**caractérisé en ce qu'**
dans la zone de la mise en contact des enroulements de la bobine (14) avec le rail électrique (15) respectif, il n'y a pas d'inclusion d'air ou de gaz.
